(19) Europäisches Patentamt / European Patent Office / Office européen des brevets

(11) **EP 3 094 988 B1**

(12) **EUROPÄISCHE PATENTSCHRIFT**

(45) Veröffentlichungstag und Bekanntmachung des Hinweises auf die Patenterteilung:
**17.08.2022 Patentblatt 2022/33**

(21) Anmeldenummer: **15700638.8**

(22) Anmeldetag: **15.01.2015**

(51) Internationale Patentklassifikation (IPC):
**G01S 15/00** *(2020.01)*

(52) Gemeinsame Patentklassifikation (CPC):
**G01S 15/003; G01S 5/22; G01S 15/87;**
G01V 1/3835

(86) Internationale Anmeldenummer:
**PCT/EP2015/000063**

(87) Internationale Veröffentlichungsnummer:
**WO 2015/106966 (23.07.2015 Gazette 2015/29)**

(54) **ERKENNEN VON OBJEKTEN AUF SEE MITTELS MOBILER SONAREMITTER**

DETECTION OF OBJECTS AT SEA USING MOBILE SONAR EMITTERS

DÉTECTION D'OBJETS EN MER AU MOYEN D'ÉMETTEURS SONAR MOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.01.2014 DE 102014000561**

(43) Veröffentlichungstag der Anmeldung:
**23.11.2016 Patentblatt 2016/47**

(73) Patentinhaber: **thyssenkrupp Marine Systems GmbH**
**24143 Kiel (DE)**

(72) Erfinder:
• **OTTO, Helge**
**29588 Oetzen (DE)**
• **EBELING, Bastian**
**25495 Kummerfeld (DE)**

(74) Vertreter: **thyssenkrupp Intellectual Property GmbH**
**ThyssenKrupp Allee 1**
**45143 Essen (DE)**

(56) Entgegenhaltungen:
**US-A- 4 060 790      US-A1- 2006 083 110**
**US-A1- 2010 246 321**

• **Andrzej Elminowicz et al.: "Bistatic systems", Archives of Acoustics, Bd. 31, Nr. 4 2006, Seiten 1-6, XP002738777, Gefunden im Internet: URL:http://www.pta-krakow.agh.edu.pl/ok_pta/osa2006/125_pop.pdf [gefunden am 2015-04-21]**
• **LU JIA ET AL: "The research on the coverage area of multistatic sonar under various work modes", 2013 OCEANS - SAN DIEGO, MTS, 23. September 2013 (2013-09-23), Seiten 1-4, XP032567919, [gefunden am 2014-02-14]**

EP 3 094 988 B1

**Beschreibung**

Die Erfindung bezieht sich auf ein Verfahren zum Erkennen von Objekten mit oder ohne aktiver Signatur in einem Fluid mit Hilfe eines Passivsonars. Zur Erweiterung der Sonarfunktionen ist es sinnvoll, auf See befindliche Objekte, die über keine aktive Signatur verfügen, mit Hilfe eines Passivsonars aufzuspüren. Es ist allgemein bekannt, dass bisher mit verschiedenen Methoden das Ausbringen von Sonarbojen z.B. mit einem Geschoß (DE102007048073) und Erkennen von Objekten wie z.B. U-Booten (GB2320556) durch Systeme in Verbindung mit Sonarbojen bestückt mit Hydrophonen, wie beispielsweise vom Typ DIFAR, geschieht. Auch ist das Ausbringen von Detonatoren zum Analysieren des Umfeldes (US5164919) bereits bekannt.

Ebenso die Zusammenlegung von Schallstrahler und Hydrophon in einer Sonarboje (DE000003934747) als geschlossenes und Auswertungsplattform gebundenes System gilt als Stand der Technik. Alle diese Möglichkeiten der Ortung haben gleich mehrere Nachteile, dass u.a. Übergänge von verschiedenen Wasserschichten, sogenannte Sprungschichten, nicht überwunden werden können. Eine umfassende Detektion ist somit nur begrenzt möglich. Zudem bringen Auswertungsplattform gebundene Systeme den Nachteil mit sich, dass von der Auswertungsplattform immer an sich störende Signale ausgehen.

US 2010/246321 A1 zeigt ein ballistisch-akustisches Wandlersystem umfassend einen Prozessor und einen oder mehrere akustische Sensoren. Die Sensoren werden in einem Gewässer positioniert und stehen mit dem Prozessor in Verbindung. Das System ist so konfiguriert, dass akustische Energie, die von einem nicht-explosiven Geschoss erzeugt wird, wenn es auf das Wasser auftrifft, in das Wasser eindringt und sinkt, von dem einen oder den mehreren akustischen Sensoren erfasst wird. Der Prozessor ist so konfiguriert, dass er die von dem einen oder den mehreren akustischen Sensoren erfasste akustische Energie verarbeitet.

Andrzej Elminowicz et al.: "Bistatic systems", Archives of Acoustics, Bd. 31, 4 2006, Seiten 1-6, XP002738777 beschreibt die Hauptmerkmale eines bi-statischen Betriebs eines hydroakustischen Systems, sein Leistungsmodell und die durch die Umgebungs- und Ausbreitungsbedingungen in flachem Wasser auferlegten Einschränkungen.

Lu Jia et al: "The research on the coverage area of multistatic sonar under various work modes", 2013 Oceans - San Diego, MTS, 23. September 2013, Seiten 1-4, XP032567919 zeigt den Abdeckungsbereich von bistatischem Sonar unter Berücksichtigung des Absorptionsverlustes.

US 4,060,790 A zeigt ein Verfahren zum Erkennen der Anwesenheit eines feindlichen Unterseebootes innerhalb einer gegebenen Wassermasse, ohne dem feindlichen Unterseeboot die Position eines Abhörschiffes außerhalb der Wassermasse zu verraten.

US 2006/083110 A1 zeigt ein System und ein Verfahren zur bi-statischen Entfernungsmessung mittels Aktivsonar.

Aufgabe der Erfindung ist es, ein gattungsgemäßes Verfahren auf einfache Weise zu schaffen.

Die Erfindung löst die Aufgabe dadurch, dass mehrere Sonaremitter positioniert werden, die Sonarschall emittieren und dass in einem Detektorsystem die Position des Objektes aus den direkt empfangenen Signalen und den vom aufzuspürenden Objekt reflektierten Signalen ermittelt wird. Die Ermittlung der Position erfolgt unter Berücksichtigung der empfangenen Signalstärke und der daraus ableitbaren Dämpfung und Signalwegstrecke. Mehrere Sonaremitter (2) werden gemeinsam verwendet, wobei zur Unterscheidung der Sonaremitter unterschiedliche Frequenzen verwendet werden.

Der Begriff Signalstärke soll im Zusammenhang mit der Erfindung auch ähnliche Größen umfassen. Insbesondere kann anstelle der Signalstärke auch die Signalintensität, die Signalleistung, die Signalamplitude, die Lautstärke, der Schalldruckpegel, der Schallintensitätspegel oder einfach der relative Ausgangswert des Signalempfängers, z. B. in Volt oder Ampere, gemeint sein.

Weitere Ausgestaltungen der Erfindung sind durch die Verfahren gemäß Anspruch 2 bis 5.

Die Möglichkeit zum Ausbringen des Sonaremitters ermöglicht dabei auf eine einfache Weise das rasche Aufspüren solcher Objekte im Fluid, die keine aktive Signatur besitzen. Für die Durchführung des Verfahrens gemäß der Erfindung eignet sich insbesondere ein modifizierter Raketengefechtskopf oder aber auch spezielle Kanonenmunition. Alternativ kann der Sonaremitter händisch ausgesetzt werden. In weiteren Ausführungsformen kann der Sonaremitter oder eine Mehrzahl an Sonaremittern durch ein Luftfahrzeug, insbesondere einen Hubschrauber oder ein schwebefähiges unbemanntes Luftfahrzeug ausgebracht werden.

Wird ein derartiger Sonaremitter ausgesetzt, so beginnt er mit dem Aussenden des Schallsignals. Der Detektor empfängt hierbei sowohl den Schall auf direktem Wege als auch Schall-Reflexionen von Objekten. Der Empfangswinkel zum Sonaremitter ist aufgrund des direkt empfangenen Schalls bekannt; die Position eines reflektierenden Objekts kann anhand der empfangenen Reflexion berechnet werden. Verschiedene Emissionswinkel in relativer Position zum Schiff ermöglichen in diesem Zusammenhang eine verbesserte Lokalisierung. Daher ist es besonders vorteilhaft, das Gewicht des Sonaremitters vorher zu kalibrieren, um ihn langsam sinken oder unter der Oberfläche frei schweben zu lassen. Unter langsam sinken wird im Sinne der Erfindung eine Sinkgeschwindigkeit von nicht mehr als 10 m/s, bevorzugt nicht mehr 5 m/s verstanden. Weiter wird unter langsam sinken im Sinne der Erfindung eine Sinkgeschwindigkeit von wenigstens 0,01 m/s, bevorzugt von wenigstens 0,1 m/s verstanden.

Der freie Schwebeeffekt kann zum Beispiel durch Dichteänderungen des Wassers an thermischen Schichten auftreten. Hierbei sinkt der Sonaremitter zunächst langsam von der Oberfläche, bis der Sonaremitter eine thermische Schicht erreicht. Aufgrund der Dichteänderung an der thermischen Schicht sinkt der Sonaremitter nicht weiter, sondern verharrt in der thermischen Schicht und schwebt frei.

Der Schwebeeffekt kann aber auch durch an sich bekannte Maßnahmen zur Tarierung des Sonaremitters erreicht werden. Derartige Maßnahmen sind beispielsweise das Anbringen und steuern von Auftriebskörpern, derart, dass sich Auftriebs- und Gewichtskraft in einer bestimmten Tiefe die Waage halten. Man spricht auch von einer neutralen Tarierung.

In einer weiteren Ausführungsform der Erfindung wird vor dem Ausbringen des Sonaremitters die Masse des Sonaremitters angepasst, sodass das kalibrierbare spezifische Gewicht (Dichte) des den Sonaremitter tragenden Gesamtkörpers größer ist als das des Wassers an der Wasseroberfläche. Da die Dichte des Sonaremitters größer ist als die Dichte des Wassers sinkt dieser. Durch Einstellung des Dichteunterschieds kann die Sinkgeschwindigkeit eingestellt werden.

Um die Genauigkeit des Systems noch weiter zu erhöhen, werden mehrere derartige Sonaremitter in beliebigen Anordnungen in Position gebracht. Hierbei werden überdies unterschiedliche Frequenzen eingesetzt, damit die Sonaremitter voneinander unterschieden werden können. Welche Frequenz/Frequenzen vom Sender genutzt wird/werden, kann kurz vor seiner Positionierung konfiguriert werden: Dies kann vorzugsweise durch eine drahtlose Programmierschnittstelle oder auch kabelgebunden erfolgen.

In weiteren Ausführungsformen der Erfindung weist der Sonaremitter eine drahtlose Programmierschnittstelle oder eine drahtgebundene Programmierschnittstelle auf. Diese Programmierschnittstelle wird zur Programmierung des Sonaremitters verwendet.

Es kann vorgesehen sein, dass auch weitere Eigenschaften des Sonaremitters und des abzugebenden Signals über die Programmierschnittstelle vorgegeben werden. Insbesondere kann der Zeitpunkt und die Dauer der Abstrahlung, die Abstrahlung bei Erreichen einer bestimmten Tiefe oder Position, die Synchronisierung der Zeit im Sonaremitter mit der Zeit am Empfänger oder mit einer globalen Zeit oder es kann die Abstrahlsignalstärke vorgegeben werden und durch die Programmierung über die Programmierschnittstelle eingestellt werden.

Ein Ausführungsbeispiel der Erfindung ist in der Zeichnung schematisch dargestellt. Die Figur zeigt ein Wasserfahrzeug 1, das sich in einer ersten Position befindet. Ein Sonaremitter 2 wird im Fall des hier beschriebenen Beispiels in einer Entfernung von etwa 3,3 Kilometern ausgesetzt und beginnt, Schallwellen mit der Signalstärke $s_0$ zu emittieren. Diese Schallwellen werden sowohl auf direktem Wege (durchgezogene Linien) als auch in Form von Reflexionen an einem aufzuspürenden Objekt 3 (punktierte Linien) von dem an Bord des Wasserfahrzeuges befindlichen Empfängers 1, in der Figur nicht dargestellten Detektorsystem registriert und ausgewertet. Hierbei werden die Signalstärken $s_1$ und $s_2$ sowie zugehörige Winkel $\varphi_1$ und $\varphi_2$ detektiert. $\varrho$ ist das Dämpfungsmaß der Reflexion. Die gesamte Wegstrecke des reflektierten Signales beträgt in dem hier beschriebenen Fall 6,7 Kilometer, was sich anhand der Dämpfung, die die Signale erfahren, ermitteln lässt. Hierbei wird die Annahme getroffen, dass ein konstantes Dämpfungsmaß $\tau$ pro Streckenlänge für die Ausbreitung im Seewasser anzunehmen ist. Hierdurch lässt sich die Entfernung entsprechend der folgenden Formel berechnen:

$$x = \frac{(s_0 - s_1)^2 - (s_0 - s_2 - \varrho)^2}{2\,\tau\big(\varrho + (s_0 - s_1)\cos(\varphi_2 - \varphi_1) - s_0 + s_2\big)} \qquad \text{Formel 1}$$

mit:

$x$:     Entfernung zum Objekt 3

$s_0$:     Signalstärke am Sonaremitter 2

$s_1$:     Signalstärke am Detektor, direkt vom Sonaremitter 2

$s_2$:     Signalstärke am Detektor nach Reflexion am Objekt 3

$\tau$:     Dämpfungsmaß pro Streckenlänge

$\varrho$:     Dämpfungsmaß der Reflexion

$\varphi_1$:     Winkel am Detektor, direkt vom Sonaremitter 2

$\varphi_2$:     Winkel am Detektor nach Reflexion am Objekt 3

Zusammen mit der Richtung $\varphi_2$ des Objekts 3 zum Wasserfahrzeug 1 kann die Position bestimmt werden.

Der Aufenthaltsbereich des Objektes 3 lässt sich auf diese Weise mit einer gewissen Unschärfe ermitteln. Die verbleibende Streuung basiert auf der Ungenauigkeit in der Signalstärke und der Winkelauflösung des Passivsonaremitters, sowie den gemittelten Erfahrungswerten für die Reflexion $\varrho$ und das Dämpfungsmaß $\tau$. Hinzu kommt, dass das Objekt 3 kein Punkt ist, sondern eine Ausdehnung aufweist. Die Ortsauflösung des Systems wird durch die Verwendung weiterer derartiger Sonaremitter 2 oder die Nutzung mehrerer empfangener Signale nachhaltig verbessert. Hierzu sind insbesondere mathematische Methoden für inverse Probleme, die zum Beispiel die Computertomographie ermöglicht haben, zu nennen, mit denen ein nicht konstantes Dämpfungsmaß $\tau$ und ggf. unbekannte Reflexionsdämpfungen $\varrho$ berücksichtigt werden können. Somit können durch eine derartige Erweiterung der Sonarfunktion Objekte ohne aktive Signatur mit einem Passivsonar aufgespürt werden. Die hierfür verwendeten Sonaremitter werden vorzugsweise mit einem geeigneten Träger oder durch Abwurf aus einem Helikopter, manuell in ihre Position gebracht und emittieren den Sonarschall während sie langsam sinken oder schweben. Die Genauigkeit des Systems kann durch den Einsatz mehrerer Sonaremitter erhöht werden.

Zur Verbesserung der Genauigkeit kann in einer Weiterbildung unmittelbar nach der Ausbringung des Sonaremitters 2 die Signalstärke $s_1$ detektiert werden. Da zu diesem Zeitpunkt die Entfernung des Sonaremitters 2 zum Empfänger 1 bekannt ist, kann das Dämpfungsmaß pro Streckenlänge $\tau$ präzise bestimmt werden, sodass lokale Bedingungen, wie Temperatur und Salzgehalt des Wassers, berücksichtigt sind. In erster Näherung wird dann dieser Wert $\tau$ im Weiteren verwendet.

## Patentansprüche

1. Verfahren zum Erkennen von Objekten mit oder ohne aktiver Signatur in einem Fluid mit Hilfe eines Passivsonars , wobei mehrere Sonaremitter (2) positioniert werden, die Sonarschall emittieren, wobei in einem Detektorsystem die Position des Objektes (3) am Empfänger (1) aus den direkt empfangenen Signalen und den vom aufzuspürenden Objekt (3) reflektierten Signalen ermittelt wird und wobei die Ermittlung der Position unter Berücksichtigung der empfangenen Signalstärke und der daraus ableitbaren Dämpfung und Signalwegstrecke erfolgt, **dadurch gekennzeichnet, dass** mehrere Sonaremitter (2) gemeinsam verwendet werden, wobei zur Unterscheidung der Sonaremitter unterschiedliche Frequenzen verwendet werden.

2. Verfahren nach Anspruch 1, **dadurch gekennzeichnet, dass** ein Sonaremitter der mehreren Sonaremitter (2) langsam absinkt oder schwebt.

3. Verfahren nach Anspruch 2, **dadurch gekennzeichnet, dass** das vor dem Ausbringen kalibrierbare spezifische Gewicht eines Sonaremitters der mehreren Sonaremitter (2) tragenden Gesamtkörpers größer ist als das des Wassers an der Wasseroberfläche.

4. Verfahren nach einem der vorangegangenen Ansprüche, **dadurch gekennzeichnet, dass** zur Programmierung eines Sonaremitters (2) der mehreren Sonaremitter eine drahtlose Programmierschnittstelle verwendet wird.

5. Verfahren nach einem der vorangegangenen Ansprüche, **dadurch gekennzeichnet, dass** zur Programmierung eines Sonaremitters (2) der mehreren Sonaremitter eine drahtgebundene Programmierschnittstelle verwendet wird.

## Claims

1. Method for detecting objects with or without an active signature in a fluid with the aid of a passive sonar, wherein a plurality of sonar-sound-emitting sonar emitters (2) are positioned, wherein in a detector system the position of the object (3) is determined at the receiver (1) from the directly received signals and the signals reflected from the object (3) to be detected, and wherein the determination of the position is performed taking account of the received signal strength and, derivable therefrom, the damping and signal route, **characterized in that** a plurality of sonar emitters (2) are used together, wherein different frequencies are used for the purposes of distinguishing between the sonar emitters.

2. Method according to Claim 1, **characterized in that** a sonar emitter of the plurality of sonar emitters (2) slowly sinks or floats.

3. Method according to Claim 2, **characterized in that** the specific weight of an overall body carrying a sonar emitter of the plurality of sonar emitters (2) is greater than that of the water at the water surface, said specific weight of the overall body being calibratable before release.

4. Method according to any one of the preceding claims, **characterized in that** a wireless programming interface is used to program a sonar emitter (2) of the plurality of sonar emitters.

5. Method according to any one of the preceding claims, **characterized in that** a wired programming interface is used to program a sonar emitter (2) of the plurality of sonar emitters.

**Revendications**

1. Procédé permettant d'identifier des objets avec ou sans signature active dans un fluide à l'aide d'un sonar passif, dans lequel plusieurs émetteurs sonar (2) sont positionnés qui émettent un son de sonar, dans lequel, dans un système de détection, la position de l'objet (3) est établie au niveau du récepteur (1) à partir des signaux reçus directement et des signaux réfléchis par l'objet (3) à localiser, et dans lequel l'établissement de la position est effectué en tenant compte de l'intensité de signal reçue et de l'atténuation et du parcours de signal pouvant en être déduits,
**caractérisé en ce que** plusieurs émetteurs sonar (2) sont utilisés ensemble, différentes fréquences étant utilisées pour différencier les émetteurs sonar.

2. Procédé selon la revendication 1, **caractérisé en ce qu'**un émetteur sonar parmi les plusieurs émetteurs sonar (2) descend ou flotte lentement.

3. Procédé selon la revendication 2, **caractérisé en ce que** le poids volumique, calibré avant la mise à l'eau, d'un corps total portant un émetteur sonar parmi les plusieurs émetteurs sonar (2) est supérieur à celui de l'eau à la surface de l'eau.

4. Procédé selon l'une quelconque des revendications précédentes, **caractérisé en ce qu'**une interface de programmation sans fil est utilisée pour la programmation d'un émetteur sonar (2) parmi les plusieurs émetteurs sonar.

5. Procédé selon l'une quelconque des revendications précédentes, **caractérisé en ce qu'**une interface de programmation câblée est utilisée pour la programmation d'un émetteur sonar (2) parmi les plusieurs émetteurs sonar.

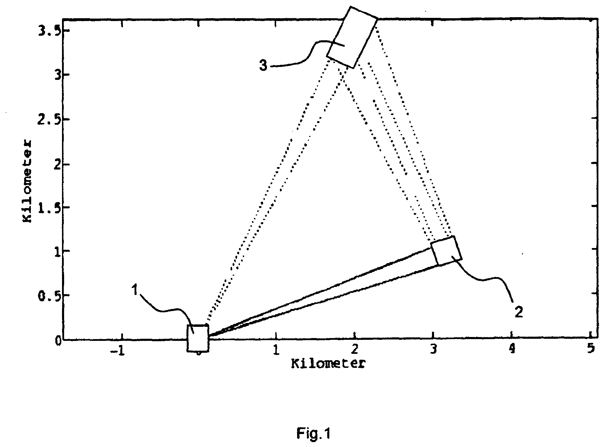

Fig.1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 102007048073
- GB 2320556 A
- US 5164919 A
- DE 000003934747
- US 2010246321 A1
- US 4060790 A
- US 2006083110 A1

### In der Beschreibung aufgeführte Nicht-Patentliteratur

- **ANDRZEJ ELMINOWICZ et al.** Bistatic systems. *Archives of Acoustics,* 2006, vol. 31, 1-6
- **LU JIA et al.** The research on the coverage area of multistatic sonar under various work modes. *2013 Oceans - San Diego, MTS,* 23. September 2013, 1-4